# EUROPÄISCHE PATENTSCHRIFT

(11) **EP 3 276 994 B1**
(45) Veröffentlichungstag und Bekanntmachung des Hinweises auf die Patenterteilung: **20.05.2020**
(21) Anmeldenummer: 16182089.9
(22) Anmeldetag: 29.07.2016
(51) Int. Cl.: H04W 8/18, H04W 8/20, H04W 4/00

(54) **TEILNEHMERIDENTITÄTSMODUL FÜR EINEN ZUGRIFF AUF EIN MOBILFUNKNETZWERK**
SUBSCRIBER IDENTITY MODULE FOR ACCESS TO A MOBILE PHONE NETWORK
MODULE D'IDENTITE D'ABONNE POUR UN ACCES A UN RESEAU HERTZIEN MOBILE

(43) Veröffentlichungstag der Anmeldung: 31.01.2018
(73) Patentinhaber: Deutsche Telekom AG, 53113 Bonn (DE)
(72) Erfinder: SONNTAG, Thomas, 53343 Wachtberg (DE)
(74) Vertreter: Raible Deissler Lehmann Patentanwälte PartG mbB

(56) Entgegenhaltungen:
- US-A1- 2012 282 891
- GSMA: "5G capabilities and requirements", 3GPP DRAFT; S3-160910 N2020_001 - LIAISON STATEMENT ON 5G CAPABILITIES AND REQUIREMENTS, 3RD GENERATION PARTNERSHIP PROJECT (3GPP), MOBILE COMPETENCE CENTRE ; 650, ROUTE DES LUCIOLES ; F-06921 SOPHIA- , Bd. SA WG3, Nr. Chennai (India); 20160725 - 20160729 24. Juli 2016 (2016-07-24), XP051141678, Gefunden im Internet: URL:http://www.3gpp.org/ftp/Meetings_3GPP_ SYNC/SA3/Docs/ [gefunden am 2016-07-24]
- HUAWEI ET AL: "Adding authentication for remote provisioning", 3GPP DRAFT; S2-163526_REMOTE PROVISIONING GENERAL SOLUTION-V10, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , Bd. SA WG2, Nr. Vienna, Austria; 20160711 - 20160715 10. Juli 2016 (2016-07-10), XP051118118, Gefunden im Internet: URL:http://www.3gpp.org/ftp/Meetings_3GPP_ SYNC/SA2/Docs/ [gefunden am 2016-07-10]
- "NGMN_5G_White_Paper_V1_0", ETSI DRAFT; NGMN_5G_WHITE_PAPER_V1_0, EUROPEAN TELECOMMUNICATIONS STANDARDS INSTITUTE (ETSI), 650, ROUTE DES LUCIOLES ; F-06921 SOPHIA-ANTIPOLIS ; FRANCE, Bd. SmartM2M - Open, 25. Juni 2015 (2015-06-25), Seiten 1-125, XP014258882, [gefunden am 2015-06-25]

## Beschreibung

### TECHNISCHES GEBIET

Die Erfindung betrifft die Kommunikation über Mobilfunknetzwerke im Allgemeinen und insbesondere ein Teilnehmeridentitätsmodul, wie beispielsweise ein SIM, eine eUICC/UICC oder dergleichen, eines Kommunikationsgeräts für einen Zugriff auf ein Mobilfunknetzwerk sowie ein Verfahren zum Betreiben eines solchen Teilnehmeridentitätsmoduls.

### TECHNISCHER HINTERGRUND

Das Kommunizieren mittels eines Kommunikationsgeräts, beispielsweise einem Mobiltelefon, über ein Mobilfunknetzwerk (auch als PLMN [Public Land Mobile Network] bezeichnet), das von einem Netzbetreiber (auch als MNO [Mobile Network Operator] bezeichnet) betrieben wird, erfordert in der Regel, dass das Kommunikationsgerät mit einem Teilnehmeridentitätsmodul zum sicheren Speichern von Daten ausgestattet ist, die den Benutzer des Kommunikationsgeräts gegenüber dem Mobilfunknetzwerk eindeutig identifizieren. Beispielsweise kommt bei einem Kommunikationsgerät, das dazu ausgestaltet ist, gemäß dem GSM-Standard (Global System for Mobile Communications) zu kommunizieren, ein austauschbares Teilnehmeridentitätsmodul mit dem Namen SIM (Subscriber Identity Module) üblicherweise in Form einer Chipkarte zum Einsatz. Die SIM-Karte enthält Teilnehmerberechtigungsdaten ("Subscription Credentials") zum Identifizieren und Authentisieren des Teilnehmers, einschließlich einer eindeutigen Teilnehmerkennung in Form einer IMSI (International Mobile Subscriber Identity) und eines Authentisierungsschlüssels Ki. Bevor einem Teilnehmer seine SIM-Karte zur Verfügung gestellt wird, werden diese Teilnehmerberechtigungsdaten üblicherweise vom SIM-Karten-Hersteller oder dem Netzbetreiber im Rahmen eines Personalisierungsprozesses als Teil eines Teilnehmerprofils (auch als Subskriptionsprofil oder kurz Subskription genannt) auf der SIM-Karte sicher hinterlegt. Eine nichtpersonalisierte SIM-Karte ist im Allgemeinen nicht für die bestimmungsgemäße Verwendung in einem Kommunikationsgerät geeignet, d.h. es ist nicht möglich mit einer nicht-personalisierten SIM-Karte ohne ein Teilnehmerprofil auf ein Mobilfunknetzwerk zuzugreifen und zu kommunizieren.

Ein bestimmtes Anwendungsgebiet von Teilnehmeridentitätsmodulen, wie SIM-Karten, UICCs, eUICCS und dergleichen, das aller Voraussicht nach in Zukunft beträchtlich wachsen wird, ist die M2M-Kommunikation ("machine-to-machine communication"), d.h. die Kommunikation zwischen Maschinen über ein Mobilfunknetzwerk ohne menschliche Interaktion (auch als "Internet of Things (loT)" bekannt). Bei der M2M-Kommunikation können Daten automatisch zwischen zahlreichen unterschiedlichen Maschinenarten ausgetauscht werden, die mit einem Teilnehmeridentitätsmodul in Form eines M2M-Moduls ausgestattet sind, beispielsweise smarte TV-Systeme, Set-Top-Boxen, Verkaufsautomaten, Fahrzeuge, Verkehrsampeln, Überwachungskameras, Sensorvorrichtungen und dergleichen.

Es ist somit abzusehen, dass mit der stark zunehmenden Anzahl von Teilnehmern, die auf die Dienste eines Mobilfunknetzwerks angewiesen sind, insbesondere im M2M-Bereich, auch der Bedarf an Teilnehmeridentitätsmodulen bzw. Teilnehmerberechtigungsdaten rasant ansteigen wird. Das Vorhalten einer großen Menge an Teilnehmeridentitätsmodulen bzw. Teilnehmerberechtigungsdaten, insbesondere Teilnehmerkennungen, stellt eine große Herausforderung für Netzbetreiber dar.

Eine Lösung dieses Problems besteht darin, Teilnehmeridentitätsmodule zu klonen, so dass diese zumindest dieselbe Teilnehmerkennung aufweisen. Dadurch sind die Teilnehmeridentitätsmodule vom Mobilfunknetzwerk jedoch voneinander nicht zu unterscheiden. Buchen sich mehrere Teilnehmeridentitätsmodule in das Mobilfunknetz ein, so entstehen dadurch Kollisionen, wobei die Kollisionswahrscheinlichkeit mit der Anzahl der Teilnehmeridentitätsmodule steigt.

Die Druckschrift "GSMA: "5G capabilities and requirements", 3GPP DRAFT; S3-160910, Bd. SA WG3, Nr. Chennai (India); 24. Juli 2016 betrifft einen 3GPP Standard, der sich mit 5G-Fähigkeiten und Anforderungen bzgl. GSMA beschäftigt. Die Druckschrift HUAWEI ET AL: "Adding authentication for remote provisioning", 3GPP DRAFT; S2-163526, FRANCE, BD. SA WG2, Nr. Vienna, Austria; 10. Juli 2016 betrifft einen 3GPP Standardbeitrag, der sich mit Authentifizierung zum ferngesteuerten Provisioning bzw. Bereitstellen für loT-Geräte befasst.

### ZUSAMMENFASSUNG DER ERFINDUNG

Vor diesem Hintergrund stellt sich der vorliegenden Erfindung die Aufgabe, ein verbessertes Teilnehmeridentitätsmodul für einen Zugriff auf ein Mobilfunknetzwerk sowie ein verbessertes Verfahren zum Betreiben eines solchen Teilnehmeridentitätsmoduls bereitzustellen, mit denen die vorstehend beschriebenen Nachteile zumindest teilweise behoben werden können.

Diese Aufgabe wird durch die Merkmale der unabhängigen Ansprüche gelöst. Vorteilhafte Weiterbildungsformen sind Gegenstand der abhängigen Ansprüche.

Die im Folgenden vorgestellten Vorrichtungen, Systeme und Verfahren können auf verschiedene Arten und Weisen implementiert sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Vorrichtungen, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen eines Mobilfunknetzes oder eines Festnetzes stattfinden, sowie das Zugangsnetz, in dem die Übertragung der Signale zwischen einer Netzwerkzugangseinrichtung und dem Kommunikationsgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

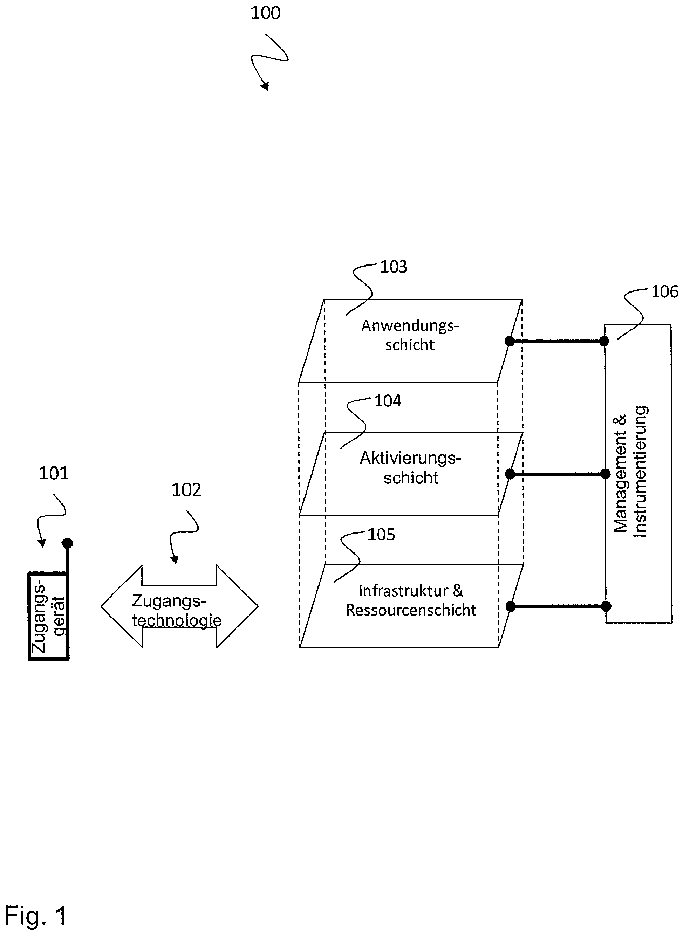

Die im Folgenden vorgestellten Vorrichtungen, Systeme und Verfahren sind dazu vorgesehen, die Kommunikation in Kommunikationsnetzen zu steigern, insbesondere in Kommunikationsnetzen gemäß der im Folgenden vorgestellten 5G-Systemarchitektur. Figur 1 zeigt eine schematische Darstellung einer solchen 5G-Systemarchitektur 100. Die 5G-Systemarchitektur 100 umfasst einen Bereich mit 5G-Kommunikationsgeräten 101, die über verschiedene Zugangstechnologien 102 mit einer mehrschichtigen Kommunikationsstruktur verbunden sind, welche eine Infrastruktur- & Ressourcenschicht 105, eine Aktivierungsschicht 104 und eine Anwendungsschicht 103 umfasst, die über eine Management- & Instrumentierungsebene 106 verwaltet werden.

Die Infrastruktur- & Ressourcenschicht 105 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs-und Speicherknoten), 5G-Geräten wie z.B. Mobiltelefonen, tragbaren Geräten, Maschinenkommunikationsmodulen und dergleichen. 5G-Geräte können vielfältige und konfigurierbare Fähigkeiten aufweisen und beispielsweise als Relay oder Hub agieren oder abhängig von dem jeweiligen Kontext als Computer/Speicher-Ressource arbeiten. Diese Ressourcen werden den höheren Schichten 104, 103 und der Management- & Instrumentierungsebene 106 über entsprechende APIs (Anwendungsprogrammier-Schnittstellen) zur Verfügung gestellt. Das Überwachen der Leistungsfähigkeit und der Konfigurationen können inhärenter Teil solcher APIs sein.

Die Aktivierungsschicht 104 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, sowie einen Satz von Konfigurationsparametern für bestimmte Teile des Netzwerks, z.B. den Funkzugang. Diese Funktionen und Fähigkeiten können auf Anforderung durch die Management- & Instrumentierungsebene 106 aufgerufen werden, und zwar durch Nutzung der dafür vorgesehenen APIs. Für bestimmte Funktionen können mehrfache Varianten existieren, z.B. verschiedene Implementierungen derselben Funktionalität, welche unterschiedliche Leistungsfähigkeiten oder Charakteristiken haben. Die verschiedenen Grade der Leistungsfähigkeit und der angebotenen Fähigkeiten können dazu verwendet werden, um die Netzwerkfunktionalitäten wesentlich weiter zu unterscheiden, als es in heutigen Netzen möglich ist, beispielsweise als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 103 umfasst spezifische Anwendungen und Dienste des Netzwerkbetreibers, von Unternehmen, vertikalen Operatoren oder von Drittparteien, die das 5G-Netzwerk nutzen. Die Schnittstelle zu der Management- & Instrumentierungsebene 106 erlaubt zum Beispiel, bestimmte, d.h. dedizierte logische Subnetzwerke (nachstehend auch als Netzwerk-Slices bezeichnet) für eine Anwendung aufzubauen, oder eine Anwendung einer existierenden Netzwerk-Slice zuzuweisen.

Die Management- & Instrumentierungsebene 106 ist der Kontaktpunkt, um die geforderten Anwendungsfälle in tatsächliche Netzwerkfunktionen und Slices umzusetzen. Sie definiert die Netzwerk-Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 105 ab. Die Management- & Instrumentierungsebene 106 verwaltet ferner sowohl die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk-Slices zu erzeugen und zu verwalten. Aufgrund der vielzähligen Aufgaben der Management- & Instrumentierungsebene 106 handelt es sich dabei in der Regel nicht um einen monolithischen Block von Funktionalität, sondern vielmehr um eine Sammlung modularer Funktionen, die Fortschritte integrieren, die in verschiedenen Netzwerkdomänen erzielt werden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und Dienstbereitstellung zu optimieren.

Die hier vorgestellten Vorrichtungen, Systeme und Verfahren sind dazu vorgesehen, die Kommunikation in Kommunikationsnetzen zu verbessern, insbesondere in 5G-Kommunikationsnetzen mit mehreren logischen Subnetzwerken bzw. Netzwerk-Slices, wie im Folgenden beschrieben.

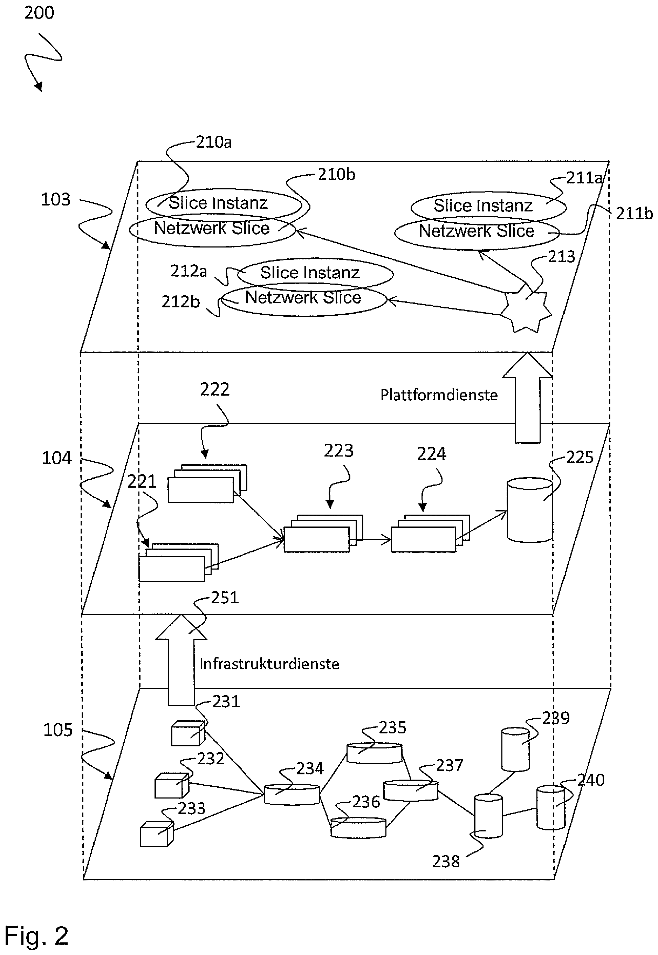

Figur 2 zeigt eine schematische Darstellung eines 5G-Kommunikationsnetzwerks 200 mit mehreren logischen Subnetzwerken bzw. Netzwerk-Slices. Das 5G-Kommunikationsnetzwerk 200 umfasst eine Infrastruktur- & Ressourcenschicht 105, eine Aktivierungsschicht 104 und eine Anwendungsschicht 103.

Die Infrastruktur- & Ressourcenschicht 105 umfasst die gesamte physikalische Infrastruktur, die einem Netzwerkbetreiber zugeordnet ist, d.h. Standorte, Kabel, Netzwerkknoten und dergleichen. Diese Schicht 105 bildet die Grundlage für alle Netzwerk-Slices. Sie ist so generisch wie möglich aufgebaut, um die Zahl der spezialisierten physikalischen Einheiten auf ein Mindestmaß zu beschränken. Die Infrastruktur- & Ressourcenschicht 105 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 105 basieren auf Hardware und Software bzw. Firmware, die für die jeweilige Operation benötigt wird und dabei als Infrastruktur- & Ressourcenschicht 105 den darüber liegenden Schichten als Ressourcenobjekte zu Verfügung gestellt wird. Beispielsweise umfassen Objekte der Infrastruktur- & Ressourcenschicht 105 virtuelle Maschinen, virtuelle Links bzw. Verbindungen und virtuelle Netzwerke, z.B. virtuelle Zugangsknoten 231, 232, 233, virtuelle Netzwerkknoten 234, 235, 236, 237 und virtuelle Computerknoten 238, 239, 240. Wie der Begriff "virtuell" bereits sagt, stellt die Infrastruktur- & Ressourcenschicht 105 die Objekte in der Form einer "Infrastruktur als Dienst" 251, d.h. in einer abstrahierenden, virtualisierten Form der nächsthöheren Schicht 104 zur Verfügung.

Die Aktivierungsschicht 104 ist oberhalb der Infrastruktur- & Ressourcenschicht 105 angeordnet. Sie nutzt die Objekte der Infrastruktur- & Ressourcenschicht 105 und fügt diesen zusätzliche Funktionalität in Form von (z.B. nicht-physikalischen) Softwareobjekten hinzu, um das Erzeugen von jeder Art von Netzwerk-Slices zu ermöglichen und so eine Plattform als Dienst der nächsthöheren Schicht 103 bereitzustellen.

Softwareobjekte können in jeder Granularität vorliegen, und ein winziges oder ein sehr großes Fragment einer Netzwerk-Slice umfassen. Um die Erzeugung von Netzwerk-Slices auf einem geeigneten Abstraktionslevel zu erlauben, können in der Aktivierungsschicht 104 verschiedene abstrahierte Objekte 221 mit anderen abstrahierten Objekten und mit virtuellen Netzwerkfunktionen 222 kombiniert werden, um kombinierte Objekte 223 zu bilden, die in aggregierte Objekte 224 überführt werden können und in einer Objektbibliothek 225 der nächsthöheren Ebene zur Verfügung gestellt werden. Damit kann die Komplexität hinter den Netzwerk-Slices verborgen werden. Beispielsweise kann ein Nutzer bzw. Kunde eine mobile Breitband-Slice erzeugen und dabei lediglich KPIs (Key Performance Indikatoren) definieren, ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 104, dass sie die dynamische Umordnung von Funktionen und Konnektivitäten in einer Netzwerk-Slice unterstützt, z.B. durch Verwendung von SFC ("Service Function Chaining" = Dienstfunktionenverkettung) oder modifizierender Software, so dass die Funktionalität einer Slice vollständig vordefiniert werden kann und sowohl näherungsweise statische Softwaremodule als auch dynamisch hinzufügbare Softwaremodule umfassen kann.

Eine Netzwerk-Slice kann dabei als software-definierte Entität betrachtet werden, die auf einem Satz von Objekten basiert, welche ein vollständiges Netzwerk definieren. Die Aktivierungsschicht 104 spielt für dieses Konzept eine Schlüsselrolle, da sie alle Softwareobjekte umfassen kann, die notwendig sind, um die Netzwerk-Slice und die entsprechenden Fertigkeiten zum Handhaben der Objekte bereitzustellen. Die Aktivierungsschicht 104 kann als eine Art von Netzwerk-Betriebssystem betrachtet werden, komplementiert durch eine Netzwerkerzeugungsumgebung. Eine wesentliche Aufgabe der Aktivierungsschicht 104 ist das Definieren der entsprechenden Abstraktionsebenen. So haben Netzwerkbetreiber ausreichend Freiraum um ihre Netzwerk-Slices auszugestalten, während der Plattform-Betreiber immer noch die physikalischen Knoten instand halten und optimieren kann. So wird beispielsweise die Ausführung der alltäglichen Aufgaben wie das Hinzufügen oder Ersetzen von eNodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln einer Netzwerk-Slice-Umgebung.

Eine Netzwerk-Slice, auch als 5G-Slice bezeichnet, unterstützt die Kommunikationsdienste eines bestimmten Verbindungstyps mit einer bestimmten Art der Handhabung der C- (Control bzw. Steuerungs-) und U-(User Data bzw. Nutzerdaten) Schicht, auch als "Control Plane" und "User Plane" bezeichnet. Eine 5G-Slice setzt sich zusammen aus einer Sammlung von verschiedenen 5G-Netzwerkfunktionen und spezifischen Funkzugangstechnologie-Einstellungen (RAT = radio access technology), die für den spezifischen Anwendungsfall miteinander kombiniert werden. Daher kann eine 5G-Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie sowie eine Konfiguration der 5G-Geräte. Nicht alle Slices enthalten dieselben Funktionen, einige Funktionen, die heute für ein mobiles Netzwerk als wesentlich erscheinen, können sogar in einigen Slices nicht vorkommen. Die Intention einer 5G-Slice ist es, nur die Funktionen bereitzustellen, die für den spezifischen Anwendungsfall notwendig sind, und alle anderen unnötigen Funktionalitäten zu vermeiden. Die Flexibilität hinter dem Slice-Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte von Slices über geeignete APIs zu steuern, um so maßgeschneiderte Dienste bereitstellen zu können.

Die Anwendungsschicht 103 umfasst alle erzeugten Netzwerk-Slices 210b, 211b, 212b und bietet diese als "Netzwerk als Service" verschiedenen Netzwerknutzern, z.B. verschiedenen Teilnehmern an. Das Konzept erlaubt die Wiederbenutzung von definierten Netzwerk-Slices 210b, 211b, 212b für verschiedene Anwender, beispielsweise als eine neue Netzwerk-Slice-Instanz 210a, 211a, 212a. Beispielsweise kann eine Netzwerk-Slice 210b, 211b, 212b, welche beispielsweise einer Automotive-Anwendung zugeordnet ist, auch für verschiedene andere industrielle Anwendungen genutzt werden. Die Slice-Instanzen 210a, 211a, 212a, die von einem ersten Anwender erzeugt wurden, können beispielsweise unabhängig von den Slice-Instanzen sein, die von einem zweiten Anwender erzeugt wurden, und das obwohl die gesamte Netzwerk-Slice-Funktionalität dieselbe sein kann.

Vor diesem Hintergrund betrifft die Erfindung gemäß einem ersten Aspekt ein Teilnehmeridentitätsmodul für einen Zugriff auf ein Mobilfunknetzwerk gemäß Anspruch 1.

Gemäß einer Ausführungsform definiert das Kommunikationsprofil ferner einen Kommunikationszeitpunkt oder einen Kommunikationszeitraum für den Aufbau der Kommunikationsverbindung zu dem logischen Subnetzwerk des Mobilfunknetzwerks. Gemäß einer Ausführungsform definiert das Kommunikationsprofil einen periodisch wiederkehrenden Kommunikationszeitpunkt oder Kommunikationszeitraum für den Aufbau der Kommunikationsverbindung zu dem logischen Subnetzwerk des Mobilfunknetzwerks.

Gemäß einer Ausführungsform ist das Kommunikationsprofil ein Initialisierungsprofil (auch als Bootstrap-Profil bekannt), wobei das Initialisierungsprofil ausgebildet ist, beim Zugriff auf das Mobilfunknetzwerk ein vollständiges Teilnehmerprofil herunterzuladen, das eine eindeutige Teilnehmerkennung, insbesondere eine eindeutige IMSI, umfasst.

Gemäß einer Ausführungsform ist das Kommunikationsprofil ein Teilnehmerprofil, welches eine Teilnehmerkennung, insbesondere eine IMSI, umfasst.

Gemäß einer Ausführungsform handelt es sich bei dem Teilnehmeridentitätsmodul um ein SIM, eUICC/UICC oder M2M-Modul.

Gemäß einem zweiten Aspekt betrifft die Erfindung Kommunikationsgerät mit einem Teilnehmeridentitätsmodul gemäß dem ersten Aspekt der Erfindung, wobei das Teilnehmeridentitätsmodul fest oder entnehmbar in dem Kommunikationsgerät implementiert ist.

Gemäß einem dritten Aspekt betrifft die Erfindung eine Gruppe von Teilnehmeridentitätsmodulen für einen Zugriff auf ein Mobilfunknetzwerk gemäß Anspruch 7.

Gemäß einem vierten Aspekt betrifft die Erfindung ein Verfahren zum Betreiben eines Teilnehmeridentitätsmoduls für einen Zugriff auf ein Mobilfunknetzwerk gemäß Anspruch 8.

Gemäß einer Ausführungsform definiert das Kommunikationsprofil ferner einen Kommunikationszeitpunkt oder einen Kommunikationszeitraum für den Aufbau der Kommunikationsverbindung zu dem logischen Subnetzwerk des Mobilfunknetzwerks.

Gemäß einer Ausführungsform definiert das Kommunikationsprofil einen periodisch wiederkehrenden Kommunikationszeitpunkt oder Kommunikationszeitraum für den Aufbau der Kommunikationsverbindung zu dem logischen Subnetzwerk des Mobilfunknetzwerks.

Gemäß einer Ausführungsform ist das Kommunikationsprofil ein Initialisierungsprofil, wobei das Verfahren den weiteren Schritt umfasst, beim Zugriff auf das Mobilfunknetzwerk mit dem Initialisierungsprofil ein Teilnehmerprofil herunterzuladen, das eine eindeutige Teilnehmerkennung, insbesondere eine eindeutige IMSI, umfasst.

Gemäß einer Ausführungsform ist das Kommunikationsprofil ein Teilnehmerprofil, welches eine Teilnehmerkennung, insbesondere eine IMSI, umfasst.

Gemäß einer Ausführungsform handelt es sich bei dem Teilnehmeridentitätsmodul um ein SIM, eUICC/UICC oder M2M-Modul.

Gemäß einem fünften Aspekt betrifft die Erfindung ein Computerprogramm mit einem Programmcode zum Ausführen des Verfahrens gemäß dem vierten Aspekt der Erfindung, wenn das Computerprogramm auf einem Computer ausgeführt wird. Das Teilnehmeridentitätsmodul gemäß dem ersten Aspekt der Erfindung kann programmtechnisch eingerichtet sein, um das Computerprogramm gemäß dem fünften Aspekt der Erfindung auszuführen.

Die Erfindung kann in Hardware und/oder in Software realisiert werden.

### KURZE BESCHREIBUNG DER FIGUREN

Weitere Ausführungsbeispiele werden Bezug nehmend auf die beiliegenden Zeichnungen erläutert. Es zeigen:
Fig. 1 eine schematische Darstellung der Architektur eines 5G-Kommunikationsnetzwerkes;
Fig. 2 eine schematische Darstellung eines 5G-Kommunikationsnetzwerks mit mehreren Netzwerk-Slices;
Fig. 3 eine schematische Darstellung eines Kommunikationssystems mit einem Kommunikationsgerät mit einem Teilnehmeridentitätsmodul gemäß einer Ausführungsform zum Zugriff auf ein Mobilfunknetzwerk;
Fig. 4 eine schematische Darstellung eines Kommunikationssystems mit mehreren Kommunikationsgeräten mit jeweils einem Teilnehmeridentitätsmodul gemäß einer Ausführungsform zum Zugriff auf ein Mobilfunknetzwerk; und
Fig. 5 ein Ablaufdiagramm eines Verfahrens zum Betreiben eines Teilnehmeridentitätsmoduls zum Zugriff auf ein Mobilfunknetzwerk gemäß einer Ausführungsform.

### DETAILIERTE BESCHREIBUNG

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne vom Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Es werden Vorrichtungen beschrieben, und es werden Verfahren beschrieben. Es versteht sich, dass Grundeigenschaften der Vorrichtungen auch für die Verfahren gelten und umgekehrt. Deshalb wird der Kürze halber gegebenenfalls auf eine doppelte Beschreibung solcher Eigenschaften verzichtet.

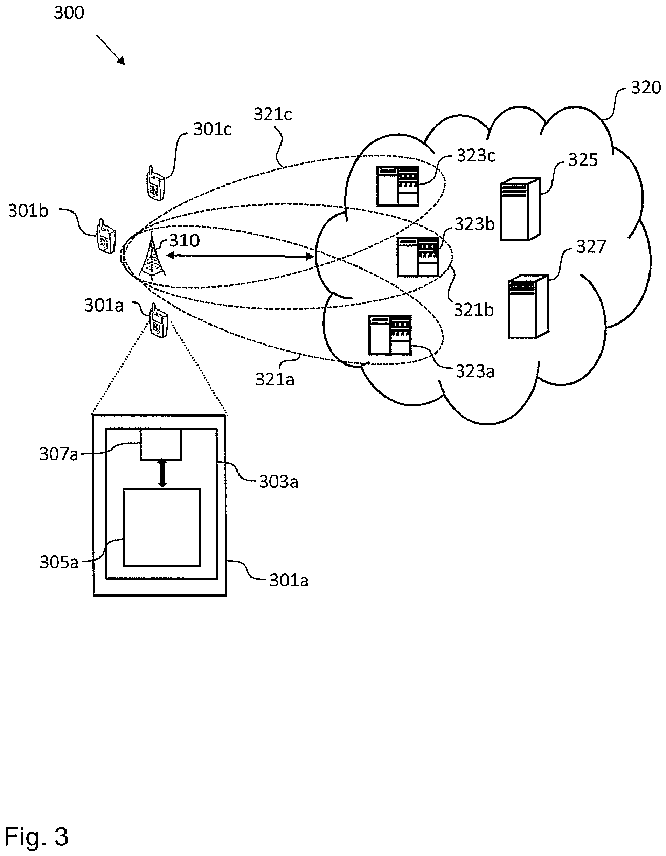

Figur 3 zeigt eine schematische Darstellung eines Kommunikationssystems 300 mit Kommunikationsgeräten 301a-c. Beispielhaft sind in Figur 3 drei Kommunikationsgeräte 301a-c dargestellt. Wie dies nachstehend im Detail beschrieben wird, sind die Kommunikationsgeräte 301a-c dazu ausgebildet, über eine Basisstation 310 mit einem Mobilfunknetzwerk 320 zu kommunizieren. Das Mobilfunknetzwerk 320 kann als 5G-Kommunikationsnetzwerk ausgebildet sein oder Teil eines 5G-Kommunikationsnetzwerks sein, welches beispielsweise ferner ein Festnetz umfasst.

Bei den Kommunikationsgeräten 301a-c kann es sich beispielsweise um Mobiltelefone oder M2M-Vorrichtungen handeln. Die Kommunikationsgeräte 301a-c können jedoch ebenso in Form von anderen Vorrichtungen implementiert sein, die dazu eingerichtet sind, über ein Mobilfunknetzwerk zu kommunizieren, wie beispielsweise ein Tablett-Computer, ein Notebook, ein TV-System, eine Set-Top-Box, ein Verkaufsautomat, ein Kraftfahrzeug, eine Überwachungskamera, eine Sensorvorrichtung und dergleichen.

Wie sich der vergrößerten Darstellung in Figur 3 entnehmen lässt, umfasst das Kommunikationsgerät 301a ein Teilnehmeridentitätsmodul 303a. Nachstehend werden das Kommunikationsgerät 301a und das Teilnehmeridentitätsmodul 303a stellvertretend für die Kommunikationsgeräte 301b und 301c beschrieben, die ebenfalls ein Teilnehmeridentitätsmodul wie das Teilnehmeridentitätsmodul 303a umfassen können.

Das Teilnehmeridentitätsmodul 303a kann beispielsweise als eine eUICC (embedded Universal Integrated Circuit Card) mit einer darauf implementierten SIM-Applikation ausgestaltet sein, d.h. als fester Bestandteil des Kommunikationsgeräts 301a. Alternativ kann das Teilnehmeridentitätsmodul 303a als eine austauschbare UICC (Universal Integrated Circuit Card) oder austauschbare SIM-Karte (Subscriber Identity Module) ausgestaltet sein.

Wie sich der vergrößerten Darstellung in Figur 3 entnehmen lässt, umfasst das Teilnehmeridentitätsmodul 303a einen Speicher 305a und eine Kommunikationsschnittstelle 307a. In einer Ausführungsform kann das Teilnehmeridentitätsmodul 303a ferner einen Prozessor (nicht in Figur 1 dargestellt) umfassen, um beispielsweise Daten aus dem Speicher 305a auszulesen und über die Kommunikationsschnittstelle 307a an das Kommunikationsgerät 301a auszugeben.

Erfindungsgemäß ist in dem Speicher 305a des Teilnehmeridentitätsmoduls 303a ein Kommunikationsprofil gespeichert, welches ausgebildet, dem Teilnehmeridentitätsmodul 303a und damit dem Kommunikationsgerät 301a den Aufbau einer Kommunikationsverbindung zu dem Mobilfunknetzwerk 320 zu ermöglichen. Dabei definiert das Kommunikationsprofil eine Subnetzwerkkennung eines logischen Subnetzwerks 321a-c des Mobilfunknetzwerks 320. Die Kommunikationsschnittstelle 307a ist ausgebildet, unter Verwendung der Subnetzwerkkennung des Kommunikationsprofils eine Kommunikationsverbindung zu dem logischen Subnetzwerk 321a-c des Mobilfunknetzwerks 320 aufzubauen.

In Figur 3 sind beispielhaft drei logische Subnetzwerke 321a-c dargestellt, die, wie vorstehend beschrieben, auch als Netzwerk-Slices bezeichnet werden. Diese Netzwerk-Slices 321a-c können auf physikalischer Infrastruktur des Mobilfunknetzwerks 320, beispielsweise auf jeweiligen Servern 323a-c instanziiert sein.

Der Begriff "Netzwerk-Slice" bzw. "Netzwerk-Slicing" betrifft ein Konzept zum Betreiben mehrerer logische Netzwerke als virtuell unabhängige, d.h. logisch entkoppelte, Einheiten auf einer gemeinsamen physikalischen Netzwerk-Infrastruktur. In diesem Sinne stellt ein Netzwerk-Slice ein unabhängiges virtuelles Ende-zu-Ende-Netzwerk dar, das sich aus Anwendersicht auf dieselbe Art und Weise verhält wie ein physikalisches Netzwerk, einschließlich einer Business-Logik und Netzwerkmanagementfähigkeiten. Für weitere Details zu Netzwerk-Slices im Sinne der vorlegenden Erfindung wird auf "NGMN 5G White Paper" und insbesondere auf den Abschnitt 5.4 davon verwiesen, das auf der Webseite der "NGMN Alliance" unter der URL "https://www.ngmn.org/home.html" abgerufen werden kann und auf das hiermit vollumfänglich Bezug genommen wird.

Die in Figur 3 dargestellten Netzwerk-Slices 321a-c des Mobilfunknetzwerks 320 können insbesondere von einem SDN-Orchestrator 325 des Mobilfunknetzwerks 320 bereitgestellt, d.h. instanziiert, betrieben und verwaltet werden, wobei die Abkürzung "SDN" für "software defined networking" steht. Ferner kann ein SDN-Controller 327 im Mobilfunknetzwerk 320 vorgesehen sein, der unter Verwendung von Switches insbesondere den Datenfluss in den Netzwerk-Slices 321a-c regelt.

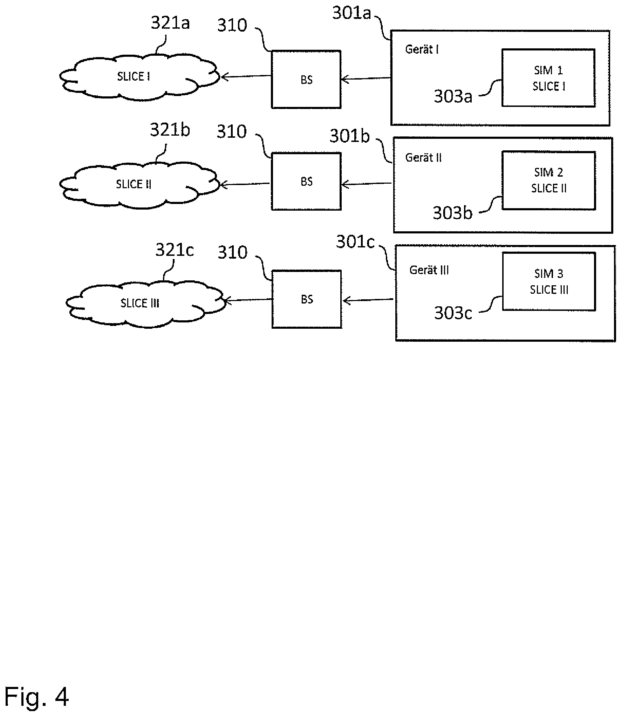

In einer Ausführungsform handelt bei dem im Speicher 105a des Teilnehmeridentitätsmoduls 103a hinterlegten Kommunikationsprofil um ein vollständiges Kommunikationsprofil in Form eines Teilnehmerprofils mit einer Teilnehmerkennung, insbesondere einer IMSI. Gemäß Ausführungsformen der Erfindung kann diese Teilnehmerkennung eindeutig sein. Gemäß anderer Ausführungsformen der Erfindung können die Teilnehmeridentitätsmodule der Kommunikationsgeräte 301a-c auch identische Teilnehmerkennungen aufweisen, da Kollisionen beim Zugriff auf das Mobilfunknetzwerk 320 durch unterschiedliche Subnetzwerkkennungen vermieden werden können, wie dies nachstehend unter weiterer Bezugnahme auf Figur 4 beschrieben wird.

Die vorstehend beschriebene erfindungsgemäße Ausgestaltung des Teilnehmeridentitätsmoduls 303a wird im Zusammenhang mit einem Teilnehmeridentitätsmodul 303b des Kommunikationsgeräts 301b und einem Teilnehmeridentitätsmodul 303c des Kommunikationsgeräts 301c in Figur 4 veranschaulicht, die jeweils als SIM 1, SIM 2 und SIM 3 bezeichnet sind. Die in den Teilnehmeridentitätsmodulen 303a-c (bzw. deren Speichern) hinterlegten Kommunikationsprofile umfassen in der in Figur 4 dargestellten Ausführungsform jeweils eine Subnetzwerkkennung "SLICE 1", "SLICE 2" und "SLICE 3", die, wie in Figur 4 angedeutet, die entsprechende Netzwerk-Slice 321a, 321b und 321c des Mobilfunknetzwerks 320 kennzeichnen.

Bei der in Figur 4 dargestellten Ausführungsform kann das jeweilige auf den Teilnehmeridentitätsmodulen 103a-c hinterlegte Kommunikationsprofil ferner eine (nicht notwendigerweise eindeutige) Teilnehmerkennung zum Aufbau einer Kommunikationsverbindung zu dem Mobilfunknetzwerk 320 umfassen. Wie bereits vorstehend beschrieben, ist die jeweilige Kommunikationsschnittstelle 307a der Teilnehmeridentitätsmodule 303a-c ausgebildet, die Kommunikationsverbindung zu dem logischen Subnetzwerk 321a-c des Mobilfunknetzwerks 320 aufzubauen, das durch die Subnetzwerkkennung identifiziert ist. Dieses Routing auf der Grundlage der Subnetzwerkkennung kann beispielsweise in der Basisstation 310 implementiert sein und/oder von dem SDN-Controller 327 des Mobilfunknetzwerks 320 gesteuert werden. Erfindungsgemäß können somit mittels der Hinterlegung einer Subnetzwerkkennung als Teil des jeweiligen Kommunikationsprofils die Teilnehmeridentitätsmodule 303a-c unterschiedlichen Netzwerk-Slices 321a-c des Mobilfunknetzwerks 320 zugeordnet werden. Dabei ist es vorstellbar, dass die Netzwerk-Slices 321a-c unterschiedliche Dienste bzw. Netzwerkfunktionen bereitstellen. Auf diese Weise können die Teilnehmeridentitätsmodule 303a-c mittels lhrer Subnetzwerkkennungen unterschiedlichen Diensten zugeordnet werden. Beispielsweise können Teilnehmeridentitätsmodule 303a-c, die Teil einer M2M-Vorrichtung sind, einer M2M-Slice des Mobilfunknetzwerks 320 zugeordnet werden. Ebenso können logische Subnetzwerke unterschiedlichen Tranchen von Teilnehmeridentitätsmodulen zugewiesen werden.

Beispielsweise kann erfindungsgemäß eine der Netzwerk-Slices 321a-c dazu ausgebildet sein, einem Teilnehmeridentitätsmodul, das beim Ausliefern nur ein Kommunikationsprofil mit einer Subnetzwerkkennung in Form eines vorläufigen Initialisierungsprofils (auch als Bootstrap-Profil bekannt) aufweist, beim erstmaligen Einbuchen in das Mobilfunknetzwerk 320 Dienste bereitzustellen, die es dem Teilnehmeridentitätsmodul ermöglichen, ein vollständiges Teilnehmerprofil inklusive einer eindeutigen Teilnehmerkennung, insbesondere einer eindeutigen IMSI, herunterzuladen.

Wie bereits vorstehend beschrieben, ermöglicht die erfindungsgemäße Subnetzwerk-Diversität die Verwendung von identischen Teilnehmerkennungen in den Kommunikationsprofilen. Gemäß Ausführungsformen der Erfindung ist es denkbar, dass dann, wenn die Kapazität einer Netzwerk-Slice erreicht ist, eine weitere Netzwerk-Slice, beispielsweise durch den SDN-Orchestrator 325, bereitgestellt wird. Dies ermöglicht eine bedarfsorientierte Skalierung von Netzzugangsressourcen.

In einer Ausführungsform definiert das Kommunikationsprofil ferner wenigstens einen Kommunikationszeitpunkt oder ein Kommunikationszeitfenster, für den Aufbau der Kommunikationsverbindung mit dem logischen Subnetzwerk 321a-c des Mobilfunknetzwerks 320, das durch die Subnetzwerkkennung identifiziert ist.

In einer Ausführungsform kann das Kommunikationsprofil einen periodisch wiederkehrenden Kommunikationszeitpunkt bzw. ein periodisch wiederkehrendes Zeitfenster zum Aufbau einer Kommunikationsverbindung mit dem logischen Subnetzwerk 321a-c des Mobilfunknetzwerks 320 definieren. Beispielsweise kann das Kommunikationsprofil einen periodisch wiederkehrenden Kommunikationszeitpunkt oder ein periodisch wiederkehrendes Zeitfenster mit einer Periode von 1 Stunde, 1 Tag oder 1 Woche definieren.

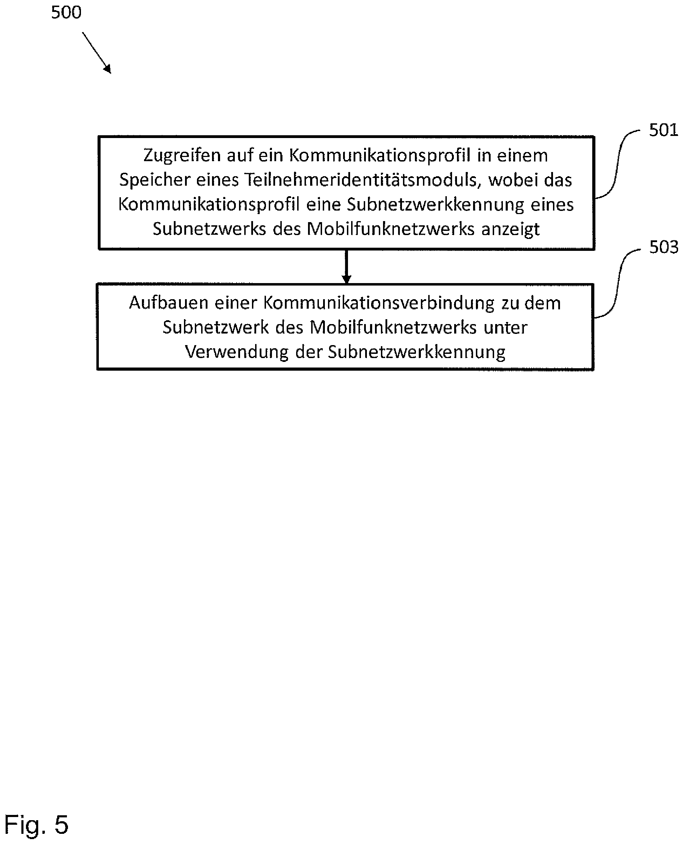

Figur 5 zeigt eine schematische Darstellung eines Verfahrens 500 zum Betreiben des Teilnehmeridentitätsmoduls 303a-c für einen Zugriff auf das Mobilfunknetzwerk 120. Das Verfahren 500 umfasst einen ersten Schritt 501 des Zugreifens auf ein Kommunikationsprofil in dem Speicher 305a des Teilnehmeridentitätsmoduls 303a-c, wobei das Kommunikationsprofil eine Subnetzwerkkennung eines logischen Subnetzwerks 321a-c des Mobilfunknetzwerks 320 anzeigt. Ferner umfasst das Verfahren 500 einen zweiten Schritt 503 des Aufbauens einer Kommunikationsverbindung zu dem Subnetzwerk 321a-c des Mobilfunknetzwerks 320 unter Verwendung der Subnetzwerkkennung.

## Patentansprüche

1. Teilnehmeridentitätsmodul (303a-c) für einen Zugriff auf ein Mobilfunknetzwerk (320) mit:
einem Speicher (305a), in welchem ein Kommunikationsprofil gespeichert ist, wobei das Kommunikationsprofil eine Netzwerk-Slice-Kennung einer Netzwerk-Slice (321a-c) des Mobilfunknetzwerks (320) aufweist; und
einer Kommunikationsschnittstelle (307a), welche ausgebildet ist, unter Verwendung der Netzwerk-Slice-Kennung eine Kommunikationsverbindung zu der Netzwerk-Slice (321a-c) des Mobilfunknetzwerks (320) aufzubauen,
wobei das Kommunikationsprofil ein Initialisierungsprofil ist und wobei das Initialisierungsprofil ausgebildet ist, beim Zugriff auf das Mobilfunknetzwerk (320) ein Teilnehmerprofil herunterzuladen, das eine eindeutige Teilnehmerkennung umfasst.

2. Teilnehmeridentitätsmodul (303a-c) nach Anspruch 1, wobei das Kommunikationsprofil ferner einen Kommunikationszeitpunkt oder einen Kommunikationszeitraum für den Aufbau der Kommunikationsverbindung zu der Netzwerk-Slice (321 a-c) des Mobilfunknetzwerks (320) aufweist.

3. Teilnehmeridentitätsmodul (303a-c) nach Anspruch 2, wobei das Kommunikationsprofil einen periodisch wiederkehrenden Kommunikationszeitpunkt oder Kommunikationszeitraum für den Aufbau der Kommunikationsverbindung zu der Netzwerk-Slice (321a-c) des Mobilfunknetzwerks (320) aufweist.

4. Teilnehmeridentitätsmodul (303a-c) nach einem der vorstehenden Ansprüche, wobei die eindeutige Teilnehmerkennung eine eindeutige IMSI umfasst.

5. Teilnehmeridentitätsmodul (303a-c) nach einem der vorstehenden Ansprüche, wobei es sich bei dem Teilnehmeridentitätsmodul (303a-c) um ein SIM, eUICC/UICC oder M2M-Modul handelt.

6. Kommunikationsgerät (301a-c) mit einem Teilnehmeridentitätsmodul (303a-c) nach einem der vorstehenden Ansprüche, wobei das Teilnehmeridentitätsmodul (303a-c) fest oder entnehmbar in dem Kommunikationsgerät (301a-c) implementiert ist.

7. System bestehend aus wenigstens zwei Teilnehmeridentitätsmodulen (303a-c) für einen Zugriff auf ein Mobilfunknetzwerk (320) mit:
einem ersten Teilnehmeridentitätsmodul (303a) mit einem ersten Speicher (305a), in welchem ein erstes Kommunikationsprofil gespeichert ist, wobei das erste Kommunikationsprofil eine erste Netzwerk-Slice-Kennung für den Aufbau einer Kommunikationsverbindung zu einer ersten Netzwerk-Slice (321a) des Mobilfunknetzwerks (320) aufweist, und mit einer ersten Kommunikationsschnittstelle (307a), welche ausgebildet ist, unter Verwendung der ersten Netzwerk-Slice-Kennung eine Kommunikationsverbindung zu der ersten Netzwerk-Slice (321a) des Mobilfunknetzwerks (320) aufzubauen; und
einem zweiten Teilnehmeridentitätsmodul (303b,c) mit einem zweiten Speicher, in welchem ein zweites Kommunikationsprofil gespeichert ist, wobei das zweite Kommunikationsprofil eine zweite Netzwerk-Slice-Kennung für den Aufbau einer Kommunikationsverbindung zu einer zweiten Netzwerk-Slice (321 b,c) des Mobilfunknetzwerks (320) aufweist, und mit einer zweiten Kommunikationsschnittstelle, welche ausgebildet ist, unter Verwendung der zweiten Netzwerk-Slice-Kennung eine Kommunikationsverbindung zu der zweiten Netzwerk-Slice (321b,c) des Mobilfunknetzwerks (320) aufzubauen;
wobei das erste Teilnehmeridentitätsmodul (303a) und das zweite Teilnehmeridentitätsmodul (303b,c) eine identische Teilnehmerkennung aufweisen, und wobei die erste Netzwerk-Slice-Kennung und die zweite Netzwerk-Slice-Kennung unterschiedlich sind.

8. Verfahren (500) zum Betreiben eines Teilnehmeridentitätsmoduls (303a-c) für einen Zugriff auf ein Mobilfunknetzwerk (320) mit:
Zugreifen (501) auf ein Kommunikationsprofil in einem Speicher (305a) des Teilnehmeridentitätsmoduls (303a-c), wobei das Kommunikationsprofil ein Initialisierungsprofil ist und eine Netzwerk-Slice-Kennung einer Netzwerk-Slice (321a-c) des Mobilfunknetzwerks (320) aufweist;
Aufbauen (503) einer Kommunikationsverbindung zu der Netzwerk-Slice (321a-c) des Mobilfunknetzwerks (320) unter Verwendung der Netzwerk-Slice-Kennung; und
Herunterladen eines Teilnehmerprofils beim Zugriff auf das Mobilfunknetzwerk (320) mit dem Initialisierungsprofil, wobei das Teilnehmerprofil eine eindeutige Teilnehmerkennung umfasst.

9. Verfahren (500) nach Anspruch 8, wobei das Kommunikationsprofil ferner einen Kommunikationszeitpunkt oder einen Kommunikationszeitraum für den Aufbau der Kommunikationsverbindung zu der Netzwerk-Slice (321a-c) des Mobilfunknetzwerks (320) aufweist.

10. Verfahren (500) nach Anspruch 9, wobei das Kommunikationsprofil einen periodisch wiederkehrenden Kommunikationszeitpunkt oder Kommunikationszeitraum für den Aufbau der Kommunikationsverbindung zu der Netzwerk-Slice (321a-c) des Mobilfunknetzwerks (320) aufweist.

11. Verfahren (500) nach einem der Ansprüche 8 bis 10, wobei die eindeutige Teilnehmerkennung eine eindeutige IMSI umfasst.

12. Verfahren (500) nach einem der Ansprüche 8 bis 11, wobei es sich bei dem Teilnehmeridentitätsmodul (303a-c) um ein SIM, eUICC/UICC oder M2M-Modul handelt.

13. Computerprogramm mit einem Programmcode zum Ausführen des Verfahrens (500) nach einem der Ansprüche 8 bis 12, wenn das Computerprogramm auf einem Computer ausgeführt wird.

## Claims

1. A subscriber identity module (303a-c) for access to a cellular network (320), having:
a memory (305a) in which a communication profile is stored, the communication profile having a network slice identifier of a network slice (321a-c) of the mobile phone network (320); and
a communication interface (307a) configured to establish a communication connection to the network slice (321 a-c) of the mobile phone network (320) using the network slice identifier,
wherein the communication profile is an initialization profile and wherein the initialization profile is adapted to download a subscriber profile when accessing the mobile phone network (320), comprising a unique subscriber identifier.

2. The subscriber identity module (303a-c) according to claim 1, wherein the communication profile further has a communication time or a communication period for establishing the communication connection to the network slice (321a-c) of the mobile phone network (320).

3. The subscriber identity module (303a-c) according to claim 2, wherein the communication profile has a periodically recurring communication time or a communication period for establishing the communication connection to the network slice (321a-c) of the mobile phone network (320).

4. The subscriber identity module (303a-c) according to any of the preceding claims, wherein the unique subscriber identifier has a unique IMSI.

5. The subscriber identity module (303a-c) according to any of the preceding claims, wherein the subscriber identity module (303a-c) is a SIM, eUICC / UICC or M2M module.

6. A communication device (301 a-c) with a subscriber identity module (303a-c) according to any of the preceding claims, wherein the subscriber identity module (303a-c) is implemented as permanent or removable in the communication device (301a-c).

7. A system consisting of at least two subscriber identity modules (303a-c) for access to a mobile phone network (320) with:
a first subscriber identity module (303a) with a first memory (305a), in which a first communication profile is stored, wherein the first communication profile has a first network slice identifier for establishing a communication connection to a first network slice (321a) of the mobile phone network (320), and with a first communication interface (307a) configured to establish a communication connection to the first network slice (321a) of the mobile phone network (320) using the first network slice identifier; and
a second subscriber identity module (303b,c) with a second memory, in which a second communication profile is stored, wherein the second communication profile has a second network slice identifier for establishing a communication connection to a second network slice (321 b, c) of the mobile phone network (320), and with a second communication interface configured to establish a communication connection to the second network slice (321 b, c) of the mobile phone network (320) using the second network slice identifier;
wherein the first subscriber identity module (303a) and the second subscriber identity module (303b,c) have an identical subscriber identifier, and wherein the first network slice identifier and the second network slice identifier are different.

8. A method (500) of operating a subscriber identity module (303a-c) for access to a cellular network (320), comprising:
accessing (501) a communication profile in a memory (305a) of the subscriber identity module (303a-c), the communication profile having an initialization profile and a network slice identifier of a network slice (321 a-c) of the mobile phone network (320);
establishing (503) a communication connection to the network slice (321 a-c) of the mobile phone network (320) using the network slice identifier; and
downloading a subscriber profile when accessing the mobile phone network (320) using the initialization profile, wherein the subscriber profile comprises a unique subscriber identifier.

9. The method (500) according to claim 8, wherein the communication profile further has a communication time or a communication period for establishing the communication connection to the network slice (321a-c) of the mobile phone network (320).

10. The method (500) according to claim 9, wherein the communication profile has a periodically recurring communication time or a communication period for establishing the communication connection to the network slice (321a-c) of the mobile phone network (320).

11. The method (500) according to any of claims 8 to 10, wherein the unique subscriber identifier has a unique IMSI.

12. The method (500) according to any of claims 8 to 11, wherein the subscriber identity module (303a-c) is a SIM, eUICC / UICC or M2M module.

13. A computer program having a program code for executing the method (500) according to any of claims 8 to 12 when the computer program is run on a computer.

## Revendications

1. Module d'identité d'abonné (303a-c) pour un accès à un réseau hertzien mobile (320), comportant
une mémoire (305a) destinée à enregistrer un profil de communication, sachant que ledit profil de communication présente un identifiant de tranche de réseau d'une tranche de réseau (321 a-c) du réseau hertzien mobile (320) ; et
une interface de communication (307a) conçue de manière à établir une liaison de communication avec la tranche de réseau (321 a-c) du réseau hertzien mobile (320) au moyen de l'identifiant de tranche de réseau,
sachant que le profil de communication est un profil d'initialisation et que le profil d'initialisation est conçu de manière à télécharger, lors de l'accès au réseau hertzien mobile (320), un profil d'abonné comprenant un identifiant unique d'abonné.

2. Module d'identité d'abonné (303a-c) selon la revendication 1, sachant que le profil de communication présente également un moment de communication ou un intervalle de temps de communication pour l'établissement de la liaison de communication avec la tranche de réseau (321 a-c) du réseau hertzien mobile (320).

3. Module d'identité d'abonné (303a-c) selon la revendication 2, sachant que le profil de communication présente un moment de communication ou un intervalle de temps de communication périodiquement récurrent pour l'établissement de la liaison de communication avec la tranche de réseau (321 a-c) du réseau hertzien mobile (320).

4. Module d'identité d'abonné (303a-c) selon l'une des revendications précédentes, sachant que l'identifiant unique d'abonné comprend une IMSI unique.

5. Module d'identité d'abonné (303a-c) selon l'une des revendications précédentes, sachant que le module d'identité d'abonné (303a-c) est un module SIM, eUICC/UICC ou M2M.

6. Dispositif de communication (301 a-c) comportant un module d'identité d'abonné (303a-c) selon l'une des revendications précédentes, sachant que le module d'identité d'abonné (303a-c) est implémenté de manière fixe ou amovible dans le dispositif de communication (301a-c).

7. Système composé d'au moins deux modules d'identité d'abonné (303a-c) pour un accès à un réseau hertzien mobile (320), comportant
un premier module d'identité d'abonné (303a) comportant une première mémoire (305a) destinée à enregistrer un premier profil de communication, sachant que le premier profil de communication présente un premier identifiant de tranche de réseau pour l'établissement d'une liaison de communication avec une première tranche de réseau (321a) du réseau hertzien mobile (320), et une première interface de communication (307a) conçue de manière à établir une liaison de communication avec la première tranche de réseau (321a) du réseau hertzien mobile (320) au moyen du premier identifiant de tranche de réseau ; et
un second module d'identité d'abonné (303b,c) comportant une seconde mémoire destinée à enregistrer un second profil de communication, sachant que le second profil de communication présente un second identifiant de tranche de réseau pour l'établissement d'une liaison de communication avec une seconde tranche de réseau (321 b,c) du réseau hertzien mobile (320), et une seconde interface de communication conçue de manière à établir une liaison de communication avec la seconde tranche de réseau (321 b,c) du réseau hertzien mobile (320) au moyen du second identifiant de tranche de réseau ;
sachant que le premier module d'identité d'abonné (303a) et le second module d'identité d'abonné (303b,c) présentent un identifiant d'abonné identique et sachant que le premier identifiant de tranche de réseau et le second identifiant de tranche de réseau sont différents.

8. Procédé (500) destiné à faire fonctionner un module d'identité d'abonné (303a-c) pour accès à un réseau hertzien mobile (320), comportant
l'accès (501) à un profil de communication dans une mémoire (305a) du module d'identité d'abonné (303a-c), sachant que le profil de communication est un profil d'initialisation et présente un identifiant de tranche de réseau d'une tranche de réseau (321 a-c) du réseau hertzien mobile (320) ;
l'établissement (503) d'une liaison de communication avec la tranche de réseau (321 a-c) du réseau hertzien mobile (320) au moyen de l'identifiant de tranche de réseau ; et
le téléchargement d'un profil d'abonné lors de l'accès au réseau hertzien mobile (320) à l'aide du profil d'initialisation, sachant que le profil d'abonné comprend un identifiant unique d'abonné.

9. Procédé (500) selon la revendication 8, sachant que le profil de communication présente également un moment de communication ou un intervalle de temps de communication pour l'établissement de la liaison de communication avec la tranche de réseau (321 a-c) du réseau hertzien mobile (320).

10. Procédé (500) selon la revendication 9, sachant que le profil de communication présente un moment de communication ou un intervalle de temps de communication périodiquement récurrent pour l'établissement de la liaison de communication avec la tranche de réseau (321 a-c) du réseau hertzien mobile (320).

11. Procédé (500) selon l'une des revendications 8 à 10, sachant que l'identifiant unique d'abonné comprend une IMSI unique.

12. Procédé (500) selon l'une des revendications 8 à 11, sachant que le module d'identité d'abonné (303a-c) est un module SIM, eUICC/UICC ou M2M.

13. Programme informatique comportant un code de programme pour la mise en œuvre du procédé (500) selon l'une des revendications 8 à 12, lorsque le programme informatique est exécuté sur un ordinateur.
